# EUROPÄISCHE PATENTSCHRIFT

(11) **EP 1 336 646 B1**
(45) Veröffentlichungstag und Bekanntmachung des Hinweises auf die Patenterteilung: **04.05.2005**
(21) Anmeldenummer: 02025223.5
(22) Anmeldetag: 12.11.2002
(51) Int. Cl.: C09J 1/00, C09J 1/02, C04B 28/26, H01M 8/02

(54) **Hochtemperaturfestes Klebemittel**
High temperature adhesive
Adhésif résistant aux hautes températures

(30) Priorität: 18.02.2002 DE 10206863
(43) Veröffentlichungstag der Anmeldung: 20.08.2003
(73) Patentinhaber: ElringKlinger AG, 72581 Dettingen (DE)
(72) Erfinder: Anhorn, Thomas, Chemie-Ing., 72581 Dettingen (DE); Schenk, Peter, Dipl.-Ing., 72531 Hohenstein (DE); Zerfass, Hans-Rainer, Dr., 65232 Taunusstein (DE)
(74) Vertreter: HOEGER, STELLRECHT & PARTNER Patentanwälte

(56) Entgegenhaltungen:
- US-A- 5 453 331
- DATABASE WPI Section Ch, Week 197827 Derwent Publications Ltd., London, GB; Class M23, AN 1978-49269A XP002258691 & SU 569 636 A (KOSTECHKO R F), 20. September 1977 (1977-09-20)
- DATABASE WPI Section Ch, Week 199840 Derwent Publications Ltd., London, GB; Class L02, AN 1998-463101 XP002258692 & JP 10 195418 A (SUKEGAWA ELEC), 28. Juli 1998 (1998-07-28)
- DATABASE WPI Section Ch, Week 199134 Derwent Publications Ltd., London, GB; Class G03, AN 1991-250641 XP002256653 & SU 1 595 865 A (BELORUSS KIROV TECHN INS), 30. September 1990 (1990-09-30)
- PATENT ABSTRACTS OF JAPAN & JP 06 060891 A (TONEN CORP), 4. März 1994 (1994-03-04)

## Beschreibung

Die Erfindung betrifft ein hochtemperaturfestes Klebemittel auf Wasserglasbasis.

Auf Wasserglas basierende Klebemittel sind beispielsweise als hochtemperaturbeständige Kaltklebstoffe bekannt, die unter anderem zum Verkleben von Werkstoffen auf der Basis von Kalzium- und Tonerdesilikaten, Faserstoffzementen oder Keramik verwendet werden.

Von diesen Klebstoffen ist bekannt, dass sie eine hohe Temperaturbeständigkeit aufweisen und außerdem gegen viele Chemikalien, insbesondere Säuren, organische Lösemittel, Öl und Benzin beständig sind.

Nachteilig bei den bekannten hochtemperaturfesten Klebemitteln auf Wasserglasbasis ist, dass diese bei ihrer Verwendung zum Verkleben von metallischen Substraten, insbesondere bei hohen Temperaturen, d.h. im Temperaturbereich oberhalb 700 °C, zum Ausgasen und Aufschäumen neigen, was zu einer Schwächung der Klebeverbindung und insbesondere auch zu einer verminderten Dichtigkeit derselben gegenüber Flüssigkeiten und Gasen führt.

In der Vergangenheit hat man sich zum Verkleben von metallischen Substraten beispielsweise mit Glasloten beholfen, wie sie beispielsweise in der EP 0 907 215 A1 in der Anwendung bei Hochtemperaturbrennstoffzellen im Einzelnen beschrieben sind.

Hochtemperaturfeste Klebemittel für Metallsubstrate sind insbesondere bei der Herstellung dieser Art von Brennstoffzellen von Bedeutung, bei denen eine große Vielzahl von flächigen Metallsubstraten im Stapel übereinander angeordnet sind und an vorgegebenen Flächen miteinander gasdicht und insbesondere elektrisch isolierend zu verbinden sind.

Glaslote haben hier zunächst eine ausreichende Gasdichtheit als auch eine ausreichende elektrische Isolationseigenschaft bewiesen und sind auch bei den verlangten Temperaturen > 700 °C temperaturstabil.

Nachteilig bei den Glasloten ist, dass diese nur mit einem verhältnismäßig großen Aufwand auf die Klebestellen aufgetragen und nachher die Klebeverbindung hergestellt werden kann. Werden die Glaslote im Betrieb Temperaturzyklen unterworfen, wie dies beim üblichen Einsatz von Hochtemperaturbrennstoffzellen der Fall ist, neigen diese zur Rissbildung und die aus Glaslot gebildeten Klebestellen verlieren ihre Gasdichtheit.

Aus der SU-569 636-A ist ein Nickel basierendes Dichtungsmaterial bekannt, welches neben Bornitrid Natriumsilikat enthält. Das Dichtungsmaterial dient dabei nicht als Klebemittel, sondern als Beschichtungsmaterial bei Radial- und Labyrinthdichtungen in Kompressoren und Turbinen von Flugzeugmotoren.

Die JP-10-195 418-A offenbart einen Dichtungswerkstoff zum Abdichten von Leckstellen für geschmolzenes Metall in Hochöfen. Dieses Dichtungsmaterial beinhaltet Bornitrid in Wasserglas. Der Festglasgehalt der Wasserglaskomponente beträgt 2 bis 5 Gew.-%, der Anteil Bornitrid in dem Dichtungsmaterial beträgt 20 bis 30 Gew.-%.

Ein elektrisch leitfähiges Klebemittel auf Basis eines Nickel und Kupfer enthaltenden Pulvers ist aus der SU-159 865-A bekannt. Dieses enthält als Bindemittel einen Aluminium/Chrom-Phosphat-Binder.

Das US-Patent 5,453,331 empfiehlt für Brennstoffzellen als Abdichtmittel ein Gaslot, welches auch Betriebstemperaturen bis 1000 °C unbeschadet übersteht.

Aus der JP 06-060891-A ist ein weiteres Abdichtmittel für Brennstoffzellen bekannt geworden, welches auf einem Glaslot basiert und bei 700 °C bis 950 °C erweicht, wobei Wollastonit und/oder Forstenit entsteht.

Aufgabe der vorliegenden Verbindung ist es, ein hochtemperaturfestes Klebemittel vorzuschlagen, welches sich insbesondere auch zur Verklebung von Metallsubstraten eignet und welches auch bei hohen Betriebstemperaturen seine Gasdichtigkeit und elektrischen Isolatoreigenschaften nicht verliert.

Diese Aufgabe wird durch ein hochtemperaturfestes Klebemittel gemäß Anspruch 1 gelöst.

Weitere Ausführungsformen betreffen den Gegenstand von Anspüchen 2-13, Verwengsansprüchen 14-16, Verfahrensansprüchen 17-19 und Brennstoffzellenanspuch 20.

Erstaunlicherweise lässt sich durch das Zusetzen von Bornitrid (BN) zu dem Klebemittel auf Wasserglasbasis dessen Neigung zum Aufschäumen bei hohen Betriebstemperaturen in ausreichendem Umfang unterdrücken.

Damit lassen sich sehr dünne Klebeverbindungen herstellen, die trotzdem eine ausreichende Gasdichtigkeit aufweisen und die auch bei hohen Temperaturen ihre guten Isolatoreigenschaften beibehalten und beim Durchfahren von Temperaturzyklen nicht zu Rissbildung neigen.

Darüber hinaus eignen sich die erfindungsgemäßen Klebemittel auch noch zum Verkleben von Metall und Keramik sowie von zwei Keramikelementen miteinander.

Den Effekt des Unterdrückens oder Zurückdrängens der Aufschäumneigung von hochtemperaturfesten Klebemitteln auf Wasserglasbasis lässt sich bereits mit geringen Anteilen an Bornitrid erreichen, so z.B. mit einem Anteil von 1 Gew.-% auf die Trockenmasse bezogen. Die Anteile, die die Klebemittel an Bornitrid aufweisen können, sind im großen Umfang variabel und können auf die jeweiligen Anforderungen der Klebestellen angepasst werden. Das obere Limit für den Anteil des Bornitrids an der Trockenmasse des Klebemittels beträgt 40 Gew.-% .

Häufig findet man sehr gute Klebereigenschaften, insbesondere auch eine sehr gute Gasdichtheit der Klebestelle sowie gute Isolatoreigenschaften der Klebestelle bei Zugabe von Bornitrid zu dem Klebemittel im Bereich von 7 bis 25 Gew.-% bezogen auf die Trockenmasse des Klebemittels.

Das Bornitrid wird als partikelförmiger Zuschlagstoff zu dem Klebemittel verarbeitet, und hierbei empfiehlt es sich, Bornitrid mit einer mittleren Partikelgröße von 1 µm bis 10 µm zu verwenden.

Besonders geeignete Produkte weisen eine spezifische Oberfläche des Bornitrids im Bereich von 2 bis 20 m²/g auf.

Eine der bevorzugten Modifikationen des BN ist das hexagonale, graphitanaloge BN.

Die Wasserglaskomponente selbst, welche eine Zusammensetzung der Formel

Me₂O * SiO₂

aufweist, wird vorzugsweise mit einem molaren Verhältnis von SiO₂ : Me₂ von ≥ 2:1, insbesondere >3 verwendet, wobei Me bevorzugt Li, Na und/oder K repräsentiert. Die Wasserglaskomponente kann Lithiumwasserglas mitenthalten oder vollständig von Lithiumwasserglas gebildet sein.

Entscheidend für eine gute Hochtemperaturfestigkeit der Klebestelle ist, dass die Wasserglaskomponente einen hohen Schmelzpunkt, insbesondere einen Schmelzpunkt im Bereich von 1100 bis 1150 °C oder mehr aufweist.

Dem Klebemittel können bei Bedarf ferner ein oder mehrere mineralische Füllstoffe beigemischt sein, wobei hier zu beachten ist, dass der Füllstoff so ausgewählt werden muss, dass er bis zu einer Temperatur von 1100 °C oder mehr nichtgasend ist.

An sich ist die Partikelgröße der mineralischen Füllstoffmaterialien wenig kritisch. Im Hinblick auf die häufig angestrebten Schichtdicken der Klebestellen von 10 bis 100 µm werden Partikelgrößen verwendet, die im Mittel 0,5 bis 30 µm, bevorzugt 1 bis 20 µm betragen. Bei plättchenförmigen Füllstoffen, wie z.B. Glimmer, sind auch größere Ausdehnungen in der Plättchenebene möglich, da sich diese beim Auftragen mindestens teilweise zur Oberfläche des beaufschlagten Substrats ausrichten.

Die Menge an mineralischem Füllstoff in dem Klebemittel lässt sich in weiten Grenzen variieren. Dies gibt die Möglichkeit des Zusatzes des mineralischen Füllstoffes derart, dass der Wärmeausdehnungskoeffizient des getrockneten Klebemittels ähnlich dem des zu verklebenden metallischen Substrates, insbesondere Stahl ist.

Häufig als günstig gefundene Anteile des mineralischen Füllstoffs im Klebemittel (wiederum bezogen auf die Trockenmasse des Klebemittels) betragen 1 bis 40 Gew.-%, weiter bevorzugt 4 bis 20 Gew.-%.

Die Füllstoffe können dabei auch als Mittel zum Modifizieren der Viskosität des Klebemittels verwendet werden, so dass unter Umständen ein Verdickungsmittel entfallen kann.

Bevorzugte mineralische Füllstoffe sind Kaolin, Glimmer und/oder Talkum. Andere mineralische Füllstoffe lassen sich auswählen nach der zuvor gegebenen Regel, dass der mineralische Füllstoff bei einer Temperatur von bis zu 1100 °C keine Gasanteile freisetzten darf.

Es hat sich herausgestellt, dass Klebemittel mit mineralischen Füllstoffen besonders gute Eigenschaften aufweisen, wenn Kaolin der Hauptbestandteil des Füllstoffanteils bildet oder als alleiniger Füllstoff eingesetzt wird. Kaolin lässt sich aber auch erfolgreich in Mischungen mit Talkum und Glimmer einsetzen.

In dem Klebemittel wird die Wasserglaskomponente bevorzugt mit einem Festglasgehalt von 30 bis 40 Gew.-% verarbeitet. Wird ein relativ hoher Anteil an Bornitrid verwendet, empfiehlt es sich den Wassergehalt an der Gesamtmischung etwas zu erhöhen.

Ferner kann es angezeigt sein, dem Klebemittel ein Dispergiermittel zuzusetzen, wobei hier häufig Anteile im Bereich von 0,1 bis 5 Gew.-%, bevorzugt 0,2 bis 5 Gew.%, weiter bevorzugt 0,4 bis 1,5 Gew.-%, jeweils bezogen auf die Trockenmasse des Klebemittels, in der Regel ausreichend sind um insbesondere mineralische Füllstoffe dispergiert in dem erfindungsgemäßen Klebemittel zu stabilisieren.

Werden geringe Anteile von Füllstoffen verwendet oder fallen diese Füllstoffe vollständig weg, ist es empfehlenswert dem Klebemittel ein Verdickungsmittel zuzusetzen, insbesondere in Form von Kieselsäure und in einer Menge von bis zu 10 Gew.-% (bezogen auf die Trockenmasse des Klebemittels).

Die Erfindung betrifft ferner die Verwendung eines Klebemittels wie es zuvor beschrieben wurde zum Verkleben von flächigen Metallsubstraten, insbesondere zum Verkleben von Stahlblechlagen.

Als flächige Metallsubstrate eignen sich hier insbesondere Elemente, aus denen Brennstoffzellen hergestellt werden. Hier kommen die besonderen Vorteile des erfindungsgemäßen hochtemperaturfesten Klebemittels zur Geltung, denn hier wird eine hochtemperaturfeste Klebestelle benötigt, die darüber hinaus eine hohe Gasdichtheit aufweist und zusätzlich gute Isolatoreigenschaften zeigt. Alle drei Forderungen werden in idealer Weise von dem erfindungsgemäßen Klebemittel erfüllt. Darüberhinaus sind die Klebemittelschichten auch nach dem Trocknen und Aushärten flexibel, d.h. leichte elastische Verformungen der metallischen Substrate führen nicht zu Rissen in den Klebemittelanteilen und auch nicht zu deren Abplatzen.

Solcher Art verklebte Metallsubstrate lassen Betriebstemperaturen bis zu 850 °C oder sogar teilweise noch etwas mehr zu, ohne dass deren Klebeeigenschaften, insbesondere auch deren Gasdichtheit und Isolatoreigenschaften darunter leiden.

Die Erfindung betrifft ferner ein Verfahren zum Verkleben von flächigen Metallsubstraten, wobei dieses dadurch gekennzeichnet ist, dass ein Klebemittel der zuvor beschriebenen erfindungsgemäßen Art verwendet wird und auf mindestens eine der miteinander zu verklebenden Flächen (in der Regel bei Raumtemperatur) aufgetragen wird, dass die zu verklebenden Metallsubstrate dann miteinander mindestens im Bereich der Klebestellen in Kontakt gebracht werden und dass dann das Klebemittel bei erhöhter Temperatur getrocknet und ausgehärtet wird.

Das erfindungsgemäße Klebemittel erlaubt ein Auftragen des Klebemittels bei Raumtemperatur und dies vereinfacht die Handhabung des erfindungsgemäßen Klebemittels erheblich. Beispielsweise lassen sich die erfindungsgemäßen Klebemittel mittels Siebdruck auftragen. Verglichen mit den nach dem Auftragen zunächst noch mindestens anzuschmelzenden Glasloten ergeben sich hier erhebliche Vorteile.

Die Trocknung des Klebemittels erfolgt bevorzugt bei höherer Temperatur, insbesondere bei Temperaturen von 70 °C oder höher, besonders bevorzugt im Bereich von 70 bis 80 °C.

Die Erfindung betrifft schließlich eine Brennstoffzelle mit mehreren, miteinander verklebten Metalllagen, wobei die Verklebung der Metalllagen mittels eines erfindungsgemäßen Klebemittels, wie zuvor beschrieben, hergestellt ist.

Die Erfindung wird im Folgenden anhand der Zeichnung und der Beispiele noch näher erläutert. Es zeigen im Einzelnen:
- Fig. 1: Hochtemperaturbrennstoffzellen in Explosionsdarstellung; und
- Fig. 2: ein Hochtemperaturbrennstoffzellenblock in Schnittdarstellung in zusammengebautem Zustand.

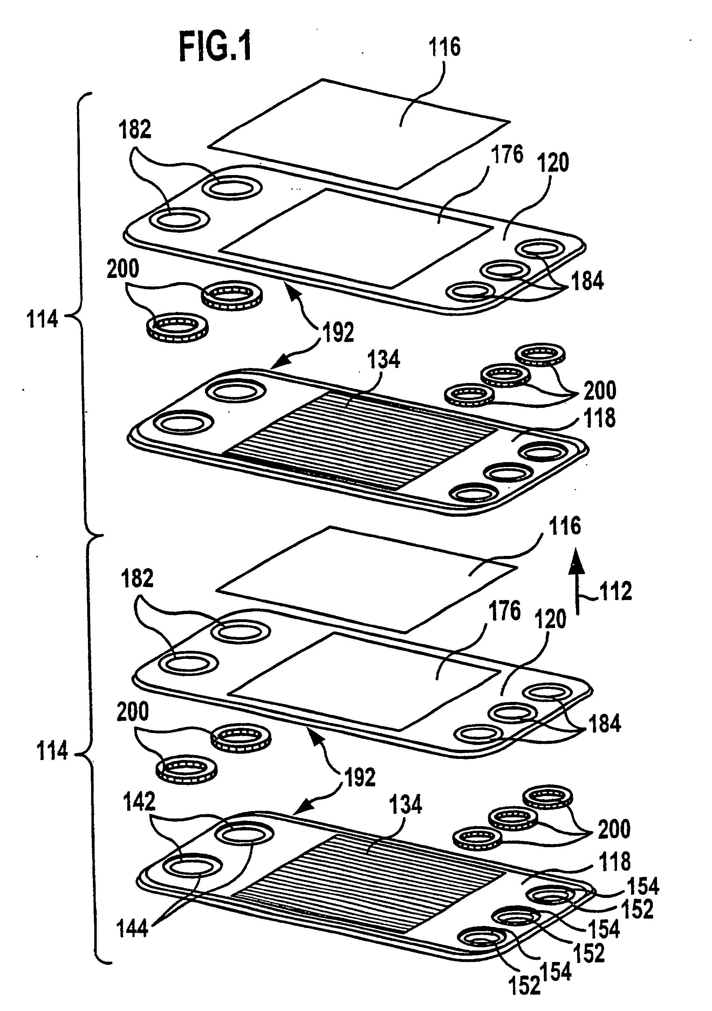

Fig. 1 enthält eine perspektivische Explosionsdarstellung zweier längs der Stapelrichtung 112 aufeinanderfolgender Brennstoffzelleneinheiten 114. Jede der Brennstoffzelleneinheiten 114 umfasst eine im wesentlichen plattenförmige Kathoden-Anoden-Elektrolyt-Einheit 116 (im folgenden kurz als KAE-Einheit bezeichnet), die zwischen einer Kontaktplatte 118 und einem Fluidführungsrahmen 120 gehalten ist.

Die KAE-Einheit 116 umfasst ein gasdurchlässiges, elektrisch leitfähiges Substrat, das beispielsweise als Metalldrahtgeflecht, Metalldrahtvlies, Metalldrahtgewebe, Metalldrahtgestrick oder als ein aus gesinterten oder gepreßten Metallpartikeln bestehender poröser Körper ausgebildet sein kann, wobei durch das Substrat ein Brenngas aus einem an das Substrat angrenzenden Brenngasraum hindurchtreten kann.

Ferner umfasst die KAE-Einheit 116 eine auf dem Substrat angeordnete plattenförmige Anode aus einem elektrisch leitfähigen keramischen Material, beispielsweise Ni-ZrO₂-Cermet (Keramik-Metall-Gemisch) sowie eine hierzu parallel angeordnete plattenförmige Kathode, die aus einem elektrisch leitfähigen keramischen Material, beispielsweise aus LaMnO₃, gebildet ist.

Zwischen Anode und Kathode ist ein Elektrolyt angeordnet, welcher vorzugsweise als Feststoffelektrolyt ausgebildet und beispielsweise aus Yttrium-stabilisiertem Zirkoniumdioxid gebildet ist.

Die Kontaktplatten 118 dienen dazu, die bei der Reaktion an der Anode frei werdenden Elektronen von der Anode über das Substrat abzuführen bzw. die für die Reaktion an der Kathode benötigten Elektronen der Kathode zuzuführen.

Hierzu besteht jede der Kontaktplatten 118 aus einem elektrisch gut leitfähigen Metallblech, das mit einer Vielzahl sich in der Längsrichtung der Kontaktplatte 118 erstreckender paralleler Rippen versehen ist, welche einen Kontaktbereich 134 bilden. Dieser Kontaktbereich 134 weist nach oben und somit zu der Anode der derselben Brennstoffzelleneinheit 114 zugehörigen KAE-Einheit 116 vorspringende anodenseitige Rippen und von dem Kontaktbereich 134 nach unten und damit zu der Kathode der einer benachbarten Brennstoffzelleneinheit 114 zugehörigen KAE-Einheit 116 vorspringende kathodenseitige Rippen auf.

Die kathodenseitigen Rippen des Kontaktbereichs 134 stehen jeweils mit der Kathode der einer benachbarten Brennstoffzelleneinheit 114 zugehörigen KAE-Einheit 116 in elektrisch leitfähigem Flächenkontakt, so dass Elektronen von der Kontaktplatte 118 zu der Kathode gelangen können. Auf diese Weise ermöglichen die Kontaktplatten 118 den Ladungsausgleich zwischen den Anoden und den Kathoden längs der Stapelrichtung 112 aufeinanderfolgender KAE-Einheiten 116.

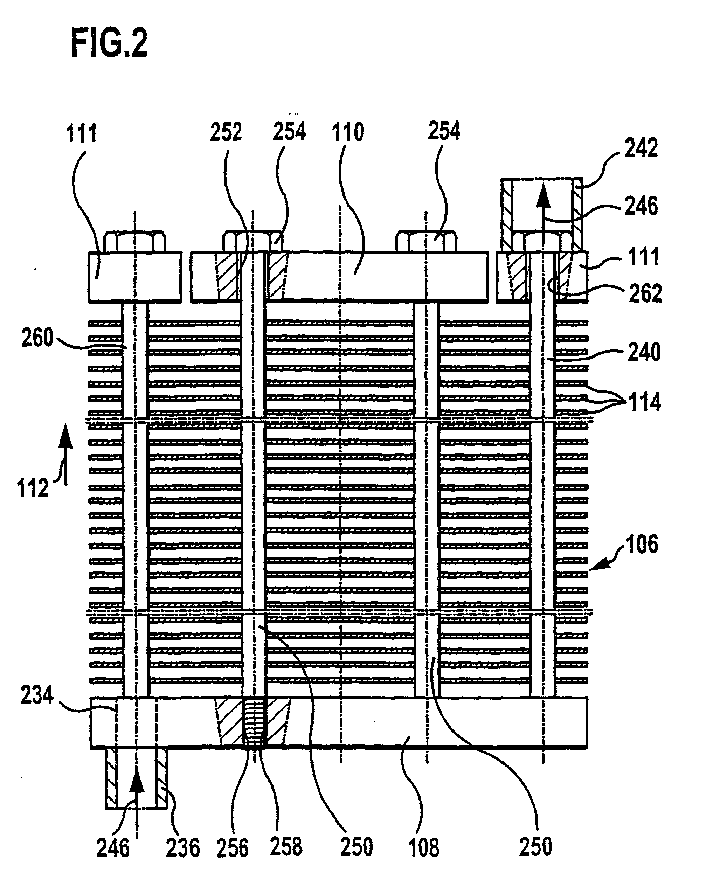

Die an den Enden eines Brennstoffzellenblockverbunds 106 (vgl. Fig. 2) angeordneten Kontaktplatten 118 sind (auf zeichnerisch nicht dargestellte Weise) mit einem externen Stromkreislauf verbunden, um die an diesen endständigen Kontaktplatten 118 entstehenden elektrischen Ladungen abzugeben.

In einem Seitenbereich einer jeder Kontaktplatte 118 sind mehrere, beispielsweise zwei, im wesentlichen kreisförmige Brenngasdurchgangsöffnungen 142 ausgebildet. Jede der Brenngasdurchgangsöffnungen 142 ist von einem ringförmigen nach unten versetzten Randbereich 144 umgeben.

Ein diesem Seitenbereich bezüglich der Kontaktfläche 134 gegenüberliegender Seitenbereich jeder Kontaktplatte 118 ist mit mehreren, beispielsweise mit drei, im wesentlichen kreisförmigen Abgasdurchgangsöffnungen 152 versehen. Jede der Abgasdurchgangsöffnungen 152 ist von einem ringförmigen nach unten versetzten Randbereich 154 umgeben.

Die Abgasdurchgangsöffnungen 152 der Kontaktplatte 118 ermöglichen den Durchtritt von aus den Brennstoffzelleneinheiten 114 abzuführendem Abgas durch die Kontaktplatte 118, welches überschüssiges Brenngas und Verbrennungsprodukte, insbesondere Wasser, enthält.

Jeder der Fluidführungsrahmen 120 weist eine im wesentlichen rechteckige, mittige Durchtrittsöffnung 176 für den Durchtritt der KAE-Einheit 116 derselben Brennstoffzelleneinheit 114 auf.

In einem Seitenbereich des Fluidführungsrahmen 120 sind mehrere, beispielsweise zwei, im wesentlichen kreisförmige Brenngasdurchgasöffnungen 182 ausgebildet, welche den Durchtritt von Brenngas durch den Fluidführungsrahmen 120 ermöglichen.

In einem diesem Seitenbereich bezüglich der Durchtrittsöffnung 176 gegenüberliegenden Seitenbereich sind mehrere, beispielsweise drei, im wesentlichen kreisförmige Abgasdurchgangsöffnungen 184 ausgebildet, welche den Durchtritt von aus den Brennstoffzelleneinheiten 114 abzuführendem Abgas durch den Fluidführungsrahmen 120 ermöglichen.

Jeweils ein Fluidführungsrahmen 120 und eine Kontaktplatte 118 bilden zusammen ein Gehäuse einer Brennstoffzelleneinheit 114. Der Fluidführungsrahmen 120 und die Kontaktplatte 118 eines solchen Gehäuses einer Brennstoffzelleneinheit 114 an ihren Verbindungsflanschen 192 aneinander festgelegt und gasdicht gegeneinander mittels einer Klebemittelschicht aus dem efindungsgemäßen hochtemperaturfesten Klebemittel abgedichtet.

Im Bereich der Abgasdurchgangsöffnungen 152, 184 sind ringförmige Abstützelemente 200 angeordnet, welche mit ihrer Unterseite jeweils an der Oberseite eines eine Abgasdurchgangsöffnung 152 umgebenden Randbereichs 154 einer Kontaktplatte 118 und mit ihrer Oberseite jeweils an der Unterseite des eine Abgasdurchgangsöffnung 184 in dem Fluidführungsrahmen 120 umgebenden Bereichs anliegen.

Ähnliche, sich nur in ihren Abmessungen von den Abstützelementen 200 an den Abgasdurchgangsöffnungen 152, 184 unterscheidende Abstützelemente 200 sind zwischen der Kontaktplatte 118 und dem Fluidführungsrahmen 120 im Bereich der Brenngasdurchgangsöffnungen 142, 182 angeordnet.

Die Abstützelemente 200 dienen dazu, die Kontaktplatte 118 und den Fluidführungsrahmen 120 eines Gehäuses einer Brennstoffzelleneinheit 114 auf Abstand voneinander zu halten und so ein Zusammendrücken des Gehäuses durch die bei der Montage des Brennstoffzellenblockverbunds 106 (vgl. Fig. 2) auf das Gehäuse einwirkende Einspannkraft zu verhindern.

Die Abstützelemente 200 können massiv mit radial verlaufenden Gasdurchtrittskanälen ausgebildet sein, es können aber auch Abstützelemente 200 verwendet werden, welche als poröse, gasdurchlässige Sinterelemente aus einem keramischen und/oder einem metallischen Material gebildet sind.

Wie am besten aus Fig. 1 zu erkennen ist, begrenzen die in der Stapelrichtung 112 aufeinanderfolgenden Kontaktplatten 118 und Fluidführungsrahmen 120 mit den jeweils dazwischen angeordneten Abstützelementen 200 mehrere, beispielsweise drei, Abgaskanäle 240, in welche Abgas aus den Brenngasräumen der Brennstoffzelleneinheiten 114 durch die Gasdurchtrittskanäle in den Abstützelementen 200 eintreten kann und die durch Klebemittel-Dichtungen gasdicht von den Oxidationsmittelräumen der Brennstoffzelleneinheiten 114 getrennt sind.

In entsprechender Weise sind auch zwischen den Randbereichen 144 der Brenngasdurchgangsöffnungen 142 jeder Kontaktplatte 118 und dem Fluidführungsrahmen 120 einer in der Stapelrichtung 112 unter der betreffenden Kontaktplatte 118 angeordneten Brennstoffzelleneinheit 114 Klebemittel-Dichtungen angeordnet, welche die Brenngasdurchgangsöffnungen 142 und 182 in der Kontaktplatte 118 bzw. in dem Fluidführungsrahmen 120 ringförmig umschließen, so dass die in der Stapelrichtung 112 aufeinanderfolgenden Kontaktplatten 118 und Fluidführungsrahmen 120 zusammen mit den jeweils dazwischen angeordneten Abstützelementen 200 und Klebemittel-Dichtungen mehrere, beispielsweise zwei, Brenngaskanäle 260 bilden, welche sich längs der Stapelrichtung 112 erstrecken, aus welchen Brenngas durch die Gasdurchtrittskanäle in den Abstützelementen 200 in die Brenngasräume der Brennstoffzelleneinheiten 114 austreten kann und welche durch die Klebemittel-Dichtungen gasdicht von den Oxidationsmittelräumen der Brennstoffzelleneinheiten 114 getrennt sind.

Erfindungsgemäß werden die Klebemittel-Dichtungen jeweils von einer gasdichten, elektrisch isolierenden Beschichtung aus einem hochtemperaturfesten erfindungsgemäßen Klebemittel gebildet, welches als Paste im Siebdruckverfahren oder mittels Walzenbeschichtung oder über eine Düse in Form einer Raupe auf die Oberfläche der Kontaktplatte 118 oder auf die Oberfläche des Fluidführungsrahmens 120 aufgebracht wird.

Ferner wird der Brenngasraum jeder Brennstoffzelleneinheit 114 von dem Oxidationsmittelraum einer in der Stapelrichtung 112 darüber angeordneten Brennstoffzelleneinheit 114 gasdicht durch eine Brenngasraum-Dichtung getrennt, welche ebenfalls aus dem erfindungsgemäßen hochtemperaturfesten Klebemittel gebildet werden kann.

Die Brennstoffzelleneinheiten 114 des Brennstoffzellenblockverbunds 106 von Fig. 2 sind längs der Stapelrichtung 112 so aufeinandergestapelt, dass die kathodenseitigen Rippen jeder Kontaktplatte 118 sich zu der Kathode der KAE-Einheit 116 der darunter angeordneten Brennstoffzelleneinheit 114 erstrecken und im elektrisch leitenden Kontakt an derselben anliegen.

Dabei fluchten die Brenngasdurchgangsöffnungen 142, 182 und die Abgasdurchgangsöffnungen 152, 184 längs der Stapelrichtung 112 aufeinanderfolgender Brennstoffzelleneinheiten 114 miteinander, um so die Brenngaskanäle 260 bzw. die Abgaskanäle 240 zu bilden.

Wie aus Fig. 2 zu ersehen ist, mündet an dem unterem Ende jedes Brenngaskanals 260 in denselben eine Brenngaszuführöffnung 234, welche eine untere Endplatte 108 des Brennstoffzellenblockverbunds 106 koaxial zu dem jeweiligen Brenngaskanal 260 durchsetzt.

An das dem jeweiligen Brenngaskanal 260 abgewandte Ende der Brenngaszuführöffnung 234 ist eine Brenngas-Zweigleitung 236 angeschlossen, welche zu einer (nicht dargestellten) Brenngaszufuhr führt.

Die Abgaskanäle 240 des Brennstoffzellenblockverbunds 106 münden an ihren oberen Enden jeweils in eine zum betreffenden Abgaskanal 240 koaxiale Abgasabführöffnung 262, welche die seitliche obere Endplatte 111 durchsetzt und an ihrem dem jeweiligen Abgaskanal 240 abgewandten Ende an jeweils eine Abgas-Zweigleitung 242 angeschlossen ist.

Diese Abgas-Zweigleitungen 242 münden in eine (nicht dargestellte) Abgasbehandlungseinheit.

Im Betrieb der Brennstoffzellenvorrichtung 106 strömt das Brenngas durch die Brenngas-Zweigleitungen 236 und die Brenngaszuführöffnungen 234 in die beiden Brenngaskanäle 260 ein und verteilt sich von dort durch die Gasdurchtrittskanäle in den brenngaskanalseitigen Abstützelemente 200 auf die Brenngasräume der Brennstoffzelleneinheiten 114, welche jeweils durch die Kontaktplatte 118, den Fluidführungsrahmen 120 und die KAE-Einheit 116 der betreffenden Brennstoffzelleneinheit 114 umschlossen sind.

Das Brenngas wird zumindest teilweise an der den jeweiligen Brenngasraum begrenzenden Anode der jeweiligen KAE-Einheit 116 oxidiert.

Das Oxidationsprodukt (Wasser) gelangt zusammen mit überschüssigem Brenngas aus den Brenngasräumen der Brennstoffzelleneinheiten 114 durch die Gasdurchtrittskanäle in den abgaskanalseitigen Abstützelementen 200 in die drei Abgaskanäle 240, aus welchen es der (nicht dargestellten) Abgasbehandlungseinheit zugeführt wird.

Um die längs der Stapelrichtung 112 aufeinanderfolgenden Brennstoffzelleneinheiten 114 durch äußere Verspannung aneinander festzulegen, sind mehrere Verbindungsschrauben 250 (siehe Fig. 2) vorgesehen, welche Durchgangsbohrungen 252 in der mittleren oberen Endplatte 110 des Brennstoffzellenblockverbunds 106 durchsetzen und an ihrem dem jeweiligen Schraubenkopf 254 abgewandten Ende mit einem Außengewinde 256 versehen sind, welches in jeweils eine Gewindebohrung 258 in der unteren Endplatte 108 des Brennstoffzellenverbunds 106 eingedreht ist, so dass die mittlere obere Endplatte 110 und die untere Endplatte 108 durch die Verbindungsschrauben 250 gegeneinander verspannt werden und eine gewünschte Presskraft über die Endplatten 108, 110 auf den mittigen, die Kontaktfelder 134 umfassenden Bereich des Stapels der Brennstoffzelleneinheiten 114 übertragbar ist (siehe Fig. 2).

Durch die Verwendung des erfindungsgemäßen hochtemperaturfesten Klebemittels lassen sich die Brennstoffzelleneinheiten mit größerer Wirtschaftlichkeit fertigen und die Klebestellen bleiben auch bei den hohen Betriebstemperaturen der Zellen von 850 °C und mehr gasdicht und weisen auch im trockenen Zustand eine Flexibilität auf, die ausreichend ist um den bei der Montage des Zellenblockverbunds auftretenden Kräfte und Verformungen problemlos zu widerstehen. Auch die beim Anfahren der Zellenblöcke, bei dem die Zellenblöcke zunächst auf die Betriebstemperatur gebracht werden macht sich die Eigenschaft der durch das erfindungsgemäße Klebemittel gebildeten hochtemperaturfesten Dichtungsstellen positiv bemerkbar. Auch hier bleiben etwaige elastische Verformungen der Metalllagen ohne nachteilige Folgen für die Gasdichtheit der Verbindung der Abstützelemente mit den Metalllagen bzw. der Metalllagen miteinander.

Die folgenden Beispiele sind Rezepturen, wie sie mit Erfolg beiden Hochtemperaturbrennstoffzellen zur Ausbildung der Dichtungsbereiche wie oben beschrieben eingesetzt werden können.

### Beispiel 1:

73 Gew.teile Natrium-Wasserglas mit einem SiO₂ : Me₂O-Verhältnis von 3,3 und einem Festglasgehalt von ca. 35 Gew.% werden mit 8 Gew.teile Kaolin, 3 Gew.teile Glimmer und 16 Gew.teile Bornitrid (alpha-BN, hexagonales graphitanaloges BN, mittlere Korngröße 4 µm).

Das so erhaltene Klebemittel wird über eine Düse als Raupe auf die zu verklebenden Metall- bzw. Keramikoberflächen einer Komponente einer Hochtemperaturbrennstoffzelle aufgetragen. Die einzelnen Komponenten der Brennstoffzelle werden zusammengefügt und der Brennstoffzellenblock bei einer Temperatur von 70 bis 80 °C getrocknet. Eine Aushärtung der Klebestellen erfolgt beim ersten Aufheizen des Blocks auf Betriebstemperatur. Die Klebestellen erweisen sich als gasdicht und halten den Betriebsbedingungen bei 850 °C im Dauertest problemlos Stand. Auch die elektrischen Widerstandswerte bei Betriebstemperatur sind ausreichend hoch. Insbesondere beobachtet man kein Aufschäumen beim Aufheizen auf die Betriebstemperatur der Zellen. Die Klebestellen weisen auch nach dem Durchfahren mehrerer Temperaturzyklen keine Rissbildung auf.

Je nach gewähltem Auftragverfahren kann es erwünscht sein die Viskosität der Klebemittelmasse zu erhöhen. Hierbei lassen sich an sich bekannte viskositätsmodifizierende Agenzien wie hochdisperse Kieselsäure ohne Beeinträchtigung der Eigenschaften der Klebeverbindungen bei der oben angegebenen Rezeptur verwenden. Die Anteile der hochdispersen Kieselsäure an der Gesamtrezeptur betragen vorzugsweise 0,2 bis 5 Gew.% womit man einen weiten Gestaltungsspielraum beim Einstellen der Viskosität hat.

Wird eine geringere Viskosität für das gewählte Auftragverfahren benötigt, lässt sich diese einfach durch Wasserzugabe erreichen.

### Beispiel 2:

Zu 68 Gew.teilen Wasserglas werden 20 Gew.teile Kaolin und 12 Gew.teile Bornitrid gegeben (Spezifikationen wie oben). Auch diese Rezeptur für das erfindungsgemäße Klebemittel ergibt im Test vergleichbare Resultate wie die Rezeptur von Beispiel 1.

### Beispiel 3:

Zu 79 Gew.teilen Wasserglas werden 7 Gew.teile Kaolin, 4 Gew.teile Talkum und 10 Gew.teile BN zugegeben (Spezifikationen wie zuvor). Auch hier werden im Test vergleichbar befriedigende Resultate erzielt wie in Beispiel 1.

### Beispiel 4:

Aus einem kommerziell erhältlichen Kaltkleber auf Wasserglasbasis, nämlich Canol 460 der Fa. Segliwa GmbH, Wiesbaden, Deutschland wird unter Zugabe von BN eine Klebemittelmischung hergestellt, die 17 Gew.% BN beinhaltet.

Auch diese Mischung lässt sich mit Erfolg als Klebemittel bei Hochtemperaturbrennstoffzellen einsetzen.

## Patentansprüche

1. Hochtemperaturfestes Klebemittel auf Wasserglasbasis **dadurch gekennzeichnet, dass** das Klebemittel als Additiv Bornitrid umfasst, welches mit einen Anteil von 1 gew.% bis 40 gew.%, bezogen auf die Trockenmasse, in dem Klebemittel enthalten ist und daß der Festglasgehalt der Wasserglas Komponente 20 bis 50 gw % beträgt.

2. Klebemittel nach Anspruch 1, **dadurch gekennzeichnet, dass** Bornitrid mit einem auf die Trockenmasse bezogenen Anteil von 7 bis 25 Gew.-%, in dem Klebemittel enthalten ist.

3. Klebemittel nach Anspruch 1 oder 2, **dadurch gekennzeichnet, dass** das Bornitrid in Partikelform vorliegt mit einer mittleren Partikelgröße von 1 µm bis 10 µm.

4. Klebemittel nach einem der Ansprüche 1 bis 3, **dadurch gekennzeichnet, dass** das Bornitrid in Form der hexagonalen, graphitanalogen Modifikation in dem Klebemittel enthalten ist.

5. Klebemittel nach einem der Ansprüche 1 bis 4, **dadurch gekennzeichnet, dass** die Wasserglaskomponente eine Zusammensetzung der Formel
Me₂O ∗ SiO₂
aufweist mit einem molaren Verhältnis SiO₂ : Me₂O von > 3, wobei Me bevorzugt Li, Na und/oder K repräsentiert.

6. Klebemittel nach einem der Ansprüche 1 bis 5, **dadurch gekennzeichnet, dass** die Wasserglaskomponente einen Schmelzpunkt im Bereich von 1100 bis 1150 °C aufweist.

7. Klebemittel nach einem der voranstehenden Ansprüche, **dadurch gekennzeichnet, dass** das Klebemittel ferner einen mineralischen Füllstoff umfasst, welcher bis zu einer Temperatur von 1100 °C oder mehr nichtgasend ist.

8. Klebemittel nach Anspruch 7, **dadurch gekennzeichnet, dass** der mineralische Füllstoff in einer Menge in dem Klebemittel enthalten ist, dass der Wärme-Ausdehnungskoeffizient des getrockneten Klebemittels ähnlich dem von Stahl ist.

9. Klebemittel nach Anspruch 6 oder 7, **dadurch gekennzeichnet, dass** der Anteil des mineralischen Füllstoffs im Klebemittel (bezogen auf die Trockenmasse) 1 Gew.-% bis 40 Gew.-%, bevorzugt 4 bis 20 Gew.-%, beträgt.

10. Klebemittel nach einem der Ansprüche 7 bis 9, **dadurch gekennzeichnet, dass** der mineralische Füllstoff ausgewählt ist aus Kaolin, Glimmer und/oder Talkum.

11. Klebemittel nach einem der Ansprüche 1 bis 10, **dadurch gekennzeichnet, dass** die Wasserglaskomponente einen Festglasgehalt von 30 bis 40 Gew.-%, aufweist.

12. Klebemittel nach einem der Ansprüche 1 bis 11, **dadurch gekennzeichnet, dass** es ferner ein Dispergiermittel, vorzugsweise mit einem Anteil von 0,2 bis 5 Gew.-%, weiter bevorzugt 0,4 bis 1,5 Gew.-% (bezogen auf die Trockenmasse) umfasst.

13. Klebemittel nach einem der Ansprüche 1 bis 12, **dadurch gekennzeichnet, dass** das Klebemittel ferner ein Verdickungsmittel, insbesondere in Form von Kieselsäure in einer Menge von bis zu 10 Gew.-% umfasst.

14. Verwendung des Klebemittels gemäß einem der Ansprüche 1 bis 13 zum Verkleben von flächigen Substraten, insbesondere Metall- und/oder Keramiksubstraten.

15. Verwendung nach Anspruch 14, **dadurch gekennzeichnet, dass** die flächigen Substrate Elemente einer Brennstoffzelle sind.

16. Verwendung nach Anspruch 14 oder 15, **dadurch gekennzeichnet, dass** die verklebten Substrate einer Betriebstemperatur bis zu 850 °C ausgesetzt sind.

17. Verfahren zum Verkleben von flächigen Metallsubstraten, **dadurch gekennzeichnet, dass** ein Klebemittel gemäß einem der Ansprüche 1 bis 13 auf mindestens eine der miteinander zu verklebenden Flächen aufgetragen wird, dass die zu verklebenden Substrate miteinander mindestens im Bereich der Klebestellen in Kontakt gebracht werden und dass dann das Klebemittel bei erhöhter Temperatur getrocknet und ausgehärtet wird.

18. Verfahren nach Anspruch 17, **dadurch gekennzeichnet, dass** das Klebemittel bei Raumtemperatur aufgetragen wird.

19. Verfahren nach Anspruch 17 oder 18, **dadurch gekennzeichnet, dass** die Trocknung bei einer Temperatur von 70 °C oder höher, bevorzugt im Bereich von 70 bis 80 °C, durchgeführt wird.

20. Brennstoffzelle mit mehreren, miteinander verklebten Metalllagen, **dadurch gekennzeichnet, dass** die Verklebung mittels eines Klebemittels gemäß einem der Ansprüche 1 bis 13 hergestellt ist.

## Claims

1. A high-temperature resistant adhesive on a water glass base,
**characterised in that** the adhesive comprises an additive in the form of boron nitride, which is contained in the adhesive with a percentage of 1 % by weight to 40 % by weight, based on the dry mass,
and **in that** the solid glass content of the water glass component is 20 to 50 % by weight.

2. An adhesive in accordance with Claim 1,
**characterised in that** boron nitride having a percentage based upon the dry mass 7 to 25% by weight is contained in the adhesive.

3. An adhesive in accordance with Claim 1 or 2,
**characterised in that** the boron nitride is present in particulate form having an average particle size of 1 µm to 10 µm.

4. An adhesive in accordance with one of Claims 1 to 3,
**characterised in that** the boron nitride is contained in the adhesive in the form of the hexagonal, graphite-like modification.

5. An adhesive in accordance with one of Claims 1 to 4,
**characterised in that** the water glass component comprises a composition having the formula
Me₂O * SiO₂
with a molar ratio SiO₂ : Me₂O > 3, wherein Me preferably represents Li, Na and/or K.

6. An adhesive in accordance with one of Claims 1 to 5,
**characterised in that** the water glass component has a melting point in the range from 1100 to 1150 °C.

7. An adhesive in accordance with one of the preceding Claims,
**characterised in that** the adhesive also comprises a mineral filler which is non-gassing up to a temperature of 1100 °C or more.

8. An adhesive in accordance with Claim 7,
**characterised in that** the quantity of mineral filler contained in the adhesive is such that the co-efficient of thermal expansion of the dry adhesive is similar to that of steel.

9. An adhesive in accordance with Claim 6 or 7,
**characterised in that** the percentage of the mineral filler in the adhesive (based upon the dry mass) is 1 to 40 % by weight and preferably 4 to 20 % by weight.

10. An adhesive in accordance with one of Claims 7 to 9,
**characterised in that** the mineral filler is selected from kaolin, mica and/or talcum.

11. An adhesive in accordance with one of Claims 1 to 10,
**characterised in that** the water glass component has a solid glass content of 30 to 40 % by weight.

12. An adhesive in accordance with any of Claims 1 to 11,
**characterised in that** it also comprises a dispersing agent, preferably having a percentage of 0.2 to 5 % by weight and more, preferably 0.4 to 1.5 % by weight (based upon the dry mass).

13. An adhesive in accordance with one of Claims 1 to 12,
**characterised in that** the adhesive also comprises a thickening agent, in particular in the form of silicic acid in a quantity of up to 10 % by weight.

14. The use of the adhesive in accordance with one of Claims 1 to 13 for sticking sheet-like substrates and especially metal and/or ceramic substrates.

15. The use in accordance with Claim 14,
**characterised in that** the sheet-like substrates are the elements of a fuel cell.

16. The use in accordance with Claim 14 or 15,
**characterised in that** the adhered substrates are subjected to an operating temperature of up to 850 °C.

17. A method of sticking sheet-like metal substrates,
**characterised in that** an adhesive in accordance with one of Claims 1 to 13 is applied to at least one of the surfaces that are to be stuck together,
**in that** the substrates that are to be stuck together are placed in contact in at least the region of the joints
and **in that** the adhesive is then dried and cured at elevated temperature.

18. A method in accordance with Claim 17,
**characterised in that** the adhesive is applied at room temperature.

19. A method in accordance with Claim 17 or 18,
**characterised in that** the drying process is carried out at a temperature of 70 °C or higher, and preferably at a temperature in the range of 70 to 80 °C.

20. A fuel cell comprising several metal layers that are stuck together,
**characterised in that** the sticking process is effected by means of an adhesive in accordance with one of Claims 1 to 13.

## Revendications

1. Adhésif résistant aux hautes températures à base de verre soluble, **caractérisé en ce que** l'adhésif comprend comme additif du nitrure de bore, qui est contenu dans l'adhésif en une quantité de 1 % en poids à 40 % en poids, rapporté à la masse sèche, et **en ce que** le quantité du verre solide du composant de verre soluble est de 20 à 50 % en poids.

2. Adhésif selon la revendication 1, **caractérisé en ce que** le nitrure de bore est contenu dans l'adhésif en une quantité jusqu'à 25 % en poids, rapporté à la masse sèche.

3. Adhésif selon la revendication 1 ou 2, **caractérisé en ce que** le nitrure de bore est sous forme particulaire avec une grosseur de particule moyenne de 1 µm à 10 µm.

4. Adhésif selon l'une des revendications 1 à 3, **caractérisé en ce que** le nitrure de bore est contenu dans l'adhésif sous forme de modification analogue à du graphite, hexagonale.

5. Adhésif selon l'une des revendications 1 à 4, **caractérisé en ce que** le composant de verre soluble a une composition de formule
Me₂O **•** SiO₂
avec un rapport molaire SiO₂ : Me₂O > 3, dans laquelle Me représente de préférence Li, Na et/ou K.

6. Adhésif selon l'une des revendications 1 à 5, **caractérisé en ce que** le composant de verre soluble présente un point de fusion dans la plage de 1100 à 1150 °C.

7. Adhésif selon l'une des revendications précédentes, **caractérisé en ce que** l'adhésif comprend en outre une charge minérale, qui est non gazéifiée jusqu'à une température de 1100 °C ou plus.

8. Adhésif selon la revendication 7, **caractérisé en ce que** la charge minérale est contenue dans l'adhésif en une quantité pour que le coefficient de dilatation à la chaleur de l'adhésif séché soit semblable à celui de l'acier.

9. Adhésif selon la revendication 6 ou 7, **caractérisé en ce que** la quantité de la charge minérale dans l'adhésif (rapporté à la masse sèche) est de 1 % en poids à 40 % en poids, de préférence de 4 à 20 % en poids.

10. Adhésif selon la revendication 7 à 9, **caractérisé en ce que** la charge minérale est choisie parmi le kaolin, le mica et/ou le talc.

11. Adhésif selon l'une des revendications 1 à 10, **caractérisé en ce que** le composant de verre soluble présente une quantité de verre solide de 30 à 40 % en poids.

12. Adhésif selon l'une des revendications 1 à 11, **caractérisé en ce qu'**il comprend en outre un dispersant, de préférence en une quantité de 0,2 à 5 % en poids, plus préférablement de 0,4 à 1,5 % en poids (rapporté à la masse sèche).

13. Adhésif selon l'une des revendications 1 à 12, **caractérisé en ce que** l'adhésif comprend en outre un épaississant, en particulier sous forme d'acide silicique en une quantité jusqu'à 10 % en poids.

14. Utilisation de l'adhésif selon l'une des revendications 1 à 13 pour le collage de substrats plats, en particulier des substrats métalliques et/ou céramiques.

15. utilisation selon la revendication 14, **caractérisée en ce que** les éléments de substrats plats sont à une pile à combustible.

16. Utilisation selon la revendication 14 ou 15, **caractérisée en ce que** les substrats collés sont exposés à une température de fonctionnement jusqu'à 850 °C.

17. Procédé de collage de substrats métalliques plats, **caractérisés en ce qu'**on dépose un adhésif selon l'une des revendications 1 à 13 sur au moins une des surfaces à coller l'une avec l'autre, qu'on amène en contact les substrats à coller l'un avec l'autre au moins dans la zone des points de colle et ensuite on sèche et on durcit l'adhésif à une température plus élevée.

18. Procédé selon la revendication 17, **caractérisé en ce que** l'adhésif est appliqué à température ambiante.

19. Procédé selon la revendication 17 ou 18, **caractérisé en ce qu'**on effectue le séchage à une température de 70 °C ou supérieure, de préférence dans la plage de 70 à 80 °C.

20. Pile à combustible avec plusieurs couches collées les unes avec les autres, **caractérisée en ce que** le collage est effectué au moyen d'un adhésif selon l'une des revendications 1 à 13.
